# EUROPÄISCHE PATENTSCHRIFT

(11) **EP 2 033 826 B1**
(45) Veröffentlichungstag und Bekanntmachung des Hinweises auf die Patenterteilung: **05.10.2011**
(21) Anmeldenummer: 08010761.8
(22) Anmeldetag: 13.06.2008
(51) Int. Cl.: B60J 7/20

(54) **Cabriolet**
Convertible
Cabriolet

(30) Priorität: 07.09.2007 DE 102007042499
(43) Veröffentlichungstag der Anmeldung: 11.03.2009
(73) Patentinhaber: Dr. Ing. h.c. F. Porsche AG, 70435 Stuttgart (DE)
(72) Erfinder: Beierl, Dominik, 70825 Korntal-Münchingen (DE); Biersack, Harald, Dr., 70839 Gerlingen (DE); Eichholz, Stefan, 71297 Mönsheim (DE)

(56) Entgegenhaltungen:
- DE-A1- 10 039 683
- DE-A1- 10 252 987
- DE-A1-102004 038 221
- DE-A1-102005 034 725
- DE-A1-102007 015 705

## Beschreibung

Bei der Erfindung wird ausgegangen von einem Cabriolet mit einer ablegbaren Dachanordnung und einem Verdeckkastendeckel, gemäß Patentanspruch 1.

Ein Cabriolet der eingangs genannten Art ist beispielsweise aus der gattungsgemäßen DE 100 39 683 A1 bekannt. Es umfasst einen heckseitigen Ablagekasten, in dem Dachanordnung, hier ein Retractable Hardtop, ablegbar ist. Der heckseitige Ablagekasten kann zumindest teilweise mit einem bewegbaren Kastendeckel verschlossen und freigegeben werden. An dem Kastendeckel ist innenseitig eine Arretiereinrichtung für die in Ablagestellung im Ablagekasten abgelegte Dachanordnung vorgesehen, die einen dem Windschutzscheibenrahmen nachempfundenen Träger umfasst, an dem somit der mit einem Antrieb ausgestattete Verdeckverschluss in Eingriff gebracht werden kann, da der Träger ein entsprechendes Formschlusselement aufweist, das zu dem Haken des Verdeckverschlusses passt. Die Arretiereinrichtung wirkt also zwischen Dachanordnung und Kastendeckel. Ingesamt ist diese Arretiervorrichtung aufwändig durch den Träger und das dem Haken genau angepasste Formschlussmittel ausgeführt und zusätzlich durch ein hohes Gewicht belastet, das hauptsächlich aus dem als Anlagefläche dienenden Träger resultiert.

Es ist daher Aufgabe der Erfindung, ein Cabriolet der eingangs genannten Art zu schaffen, das diesen Nachteil nicht aufweist.

Gelöst wird diese Aufgabe mit einem Cabriolet, das die Merkmale des Anspruchs 1 aufweist. Ausgestaltungen der Erfindung sind Gegenstand der Unteransprüche.

Für das erfindungsgemäße Cabriolet wird in vorteilhafter Weise eine Arretiereinrichtung geschaffen, die einfach aufgebaut ist und die sich durch ein geringes Gewicht auszeichnet. Ohne weiteres kann das das Formschlusselement aufweisende Riegelelement bezüglich der Dachanordnung ausgerichtet werden, da es als separates Bauteil an der Innenseite des Kastendeckels befestigbar ist. Es kann so optimiert mit der Dachanordnung ein Eingriff gebracht werden. Durch die Schwenkbewegung um die Fahrzeughochachse kann es ferner leicht aus dem Ablageweg für die Dachanordnung herausgebracht werden. Sobald die Dachanordnung ihre Ablagestellung einnimmt, wird es wieder verschwenkt und mit der Dachanordnung in Eingriff gebracht. Damit kann die Dachanordnung in der Ablagestellung sicher fixiert werden, so dass Sie einerseits geräuscharm abgelegt und andererseits vor Beschädigung geschützt ist, da Elemente der Dachanordnung nicht aufeinander schlagen oder aneinander reiben können. Dies ist insofern besonders vorteilhaft, wenn die Dachanordnung als Verdeck mit einem flexiblen Verdeckbezug ausgestattet ist. Zwischen den Elementen des Verdecks kann ferner ein gewisser Abstand durch die Arretiereinrichtung freigehalten werden, so dass dazwischen der gefaltete Verdeckbezug aufgenommen werden kann, ohne durch ein Aneinanderreiben beschädigt zu werden. Die Elemente eines solchen Verdecks wären beispielsweise das Verdeckgestänge bzw. Lenker dieses Verdeckgestänges, wie es in den Ansprüchen 4 bzw. 5 angegeben ist.

Besonders bevorzugt wird ein separater Antrieb für das Riegelelement eingesetzt, der entsprechend klein dimensioniert werden kann, da das Riegelelement lediglich geschwenkt werden muss. Alternativ könnte das Riegelelement an einen Antrieb für den Kastendeckel oder die Dachanordnung angekoppelt sein.

Die Erfindung wird nachfolgend anhand eines Ausführungsbeispiels mit Bezug auf die Zeichnung näher erläutert. Es zeigen:
- Fig. 1: in Seitenansicht ein Cabriolet mit einer Dachanordnung in Schließstellung,
- Fig. 2 und 3: unterschiedliche Teilöffnungsstellungen der Dachanordnung während der Ablagebewegung,
- Fig. 4: die Dachanordnung in der heckseitigen Ablagestellung,

- Fig. 5: in einer Perspektive stark schematisiert die abgelegt Dachanordnung und
- Fig. 6: einen Schnitt entlang der Linie VI - VI in Fig. 5.

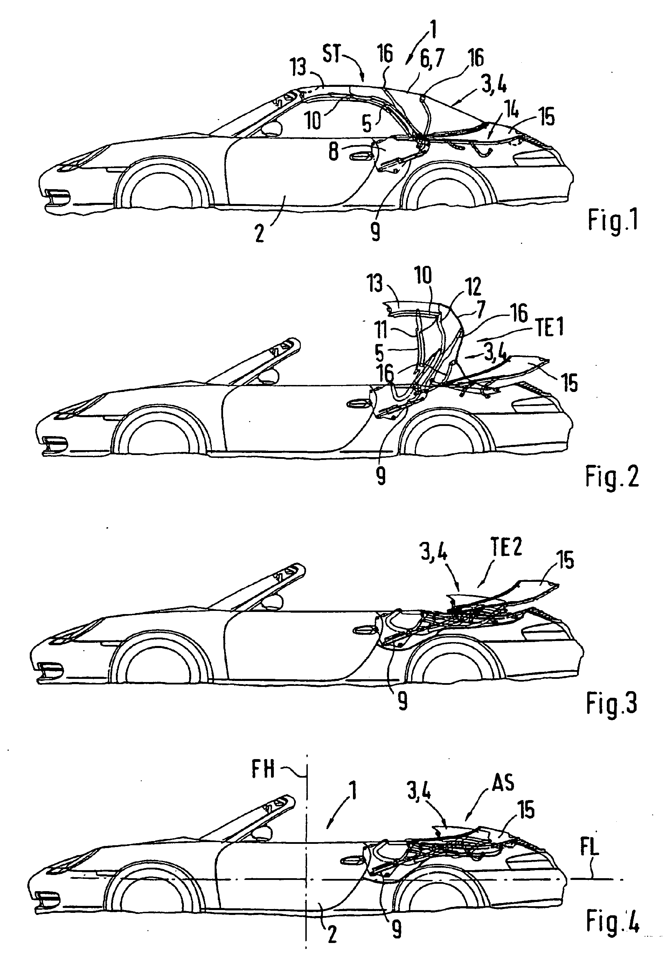

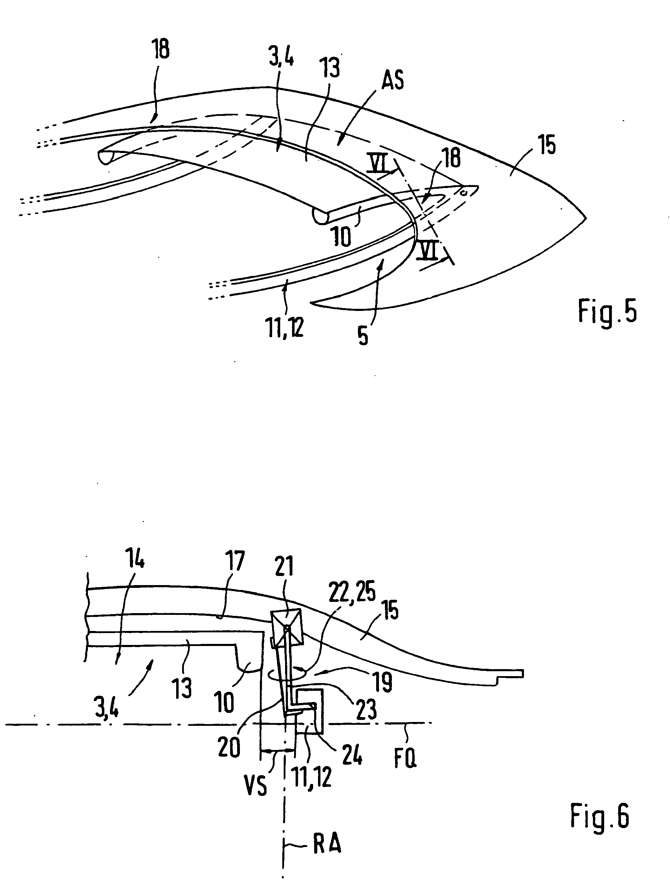

Fig. 1 zeigt ein Kraftfahrzeug 1 mit einem offenen Aufbau 2 und einer bewegbaren Dachanordnung 3, das mithin als Cabriolet ausgeführt ist. Die Dachanordnung 3 ist bevorzugt als Verdeck 4 mit einem Verdeckgestänge 5 und einer flexiblen Dachhaut 6 ausgeführt, die vom Verdeckgestänge 5 getragen ist. Die Dachhaut 6 weist einen flexiblen Verdeckbezug 7 auf. Definitionsgemäß weist das Kraftfahrzeug 1 eine Fahrzeuglängsachse FL, eine Fahrzeughochachse FH und eine Fahrzeugquerachse FQ (Fig. 6) auf.

Das Verdeckgestänge 5 ist an einem Verdecklager 8 gelagert und über einen Verdeckantrieb 9 bewegbar, so dass es aus der in Fig. 1 gezeigten Schließstellung ST kontinuierlich bewegt über Teilöffnungsstellungen TE1 und TE2 (Fig. 2 und 3) in eine heckseitige Ablagestellung AS bewegt werden kann, die in Fig. 4 zu sehen ist. Das Verdeckgestänge 5 weist einen seitlichen Dachrahmen 10 und wenigstens einen Lenker 11 auf, der an dem Verdecklager 8 gelagert ist. Vorzugsweise sind zwei Lenker 11, 12 vorgesehen, die ein Hauptgelenk des Verdecks 4 bilden.

Am Hauptgelenk ist mit Abstand zum Verdecklager 8 ein flächiges Dachelement 13 angelenkt, welches in der Ablagestellung AS zuoberst liegen kann. Der Verdeckbezug 7 wird dabei zusammengefaltet. Das als Art Paket abgelegte Verdeck 4 befindet sich in der Ablagestellung AS in einem Ablagekasten 14, der von einem vorzugsweise beweglichen Kastendeckel 15 zumindest teilweise abgedeckt bzw. verschlossen ist. In Schließstellung ST und Ablagestellung AS ist der Kastendeckel 15 in seiner geschlossenen Position, wie die Fig. 1 und 4 zeigen. Beim Bewegen des Verdecks 4 in den Ablagekasten 14 hinein oder heraus ist er hingegen nach hinten und ggf. oben wegbewegt und gibt so den Kasten 14 nach oben hin frei, wie es in den Fig. 2 und 3 zu sehen ist.

Aus Fig. 5 ist für die Dachanordnung 4 in der Ablagestellung AS ersichtlich, dass das Verdeckgestänge 5 zusammengeklappt ist und dabei das Dachelement 13, der Dachrahmen 10 und die Lenker 11 bzw. 12 mit Abstand AB übereinander und seitlich versetzt (Versatz VS in Fig. 6) zueinander liegen; in der Ablagestellung AS ist dazwischen der Verdeckbezug 7 gefaltet, der in den Fig. 5 und 6 der Übersichtlichkeit halber nicht eingezeichnet ist. In den Fig. 5 und 6 sind übrigens mit dem Verdeckgestänge 5 verbundene Spriegel 16 nicht eingezeichnet, die jedoch in den Fig. 1 bis 4 zu sehen sind. Diese Spriegel 16 stützen den Verdeckbezug 7 in der Schließstellung ST. Es wäre denkbar, die hier in Fahrzeugquerrichtung FQ linienartig verlaufenden Spriegel 16 in Richtung der Fahrzeuglängsachse FL mit einer Längserstreckung derart auszuführen, dass sie aneinander gereiht eine durchgehende Formgebungsfläche für den Verdeckbezug 7 bilden und somit auch als Flächenspriegel bezeichnet werden können. Sie sind bewegungsmäßig in das Verdeckgestänge 5 eingebunden.

An der Innenseite 17 des Kastendeckels 15, die dem Ablagekasten 14 zugewandt liegt, ist in einem seitlichen Randbereich 18 am Verdeckkastendeckel 15 eine Arretiereinrichtung 19 angeordnet, die ein nach unten, also von der Innenseite 17 weggerichtet verlaufendes Riegelelement 20 umfasst, das in einem Lager 21 etwa parallel zur Fahrzeughochachse FH um eine Riegelachse RA schwenkbar ist, was durch einen Pfeil 22 angedeutet ist. Das Riegelelement weist einen Lagerabschnitt 23 und ein dazu abgewinkelt verlaufendes Formschlusselement 24, das nasenartig von dem Lagerabschnitt 23 seitlich weggerichtet verläuft und mit dem Verdeckgestänge 5 in Eingriff gebracht ist. Durch Drehen des Lagerabschnitts 23 um die Fahrzeughochachse FH kann das Formschlusselement 24 etwa parallel zur Fahrzeugquerachse FQ bewegt und so wieder aus dem Verdeckgestänge 5 herausgeschwenkt werden und natürlich auch umgekehrt wieder in Eingriff damit gebracht werden. In dem Lenker 11 bzw. 12 kann eine Aufnahme 25 für das Formschlusselement 24 vorgesehen sein. Vorzugsweise umfasst das Lager 21 noch einen separaten Antrieb 25, insbesondere Elektromotor, für das Riegelelement 20, damit dieses in Eingriff und außer Eingriff mit der Dachanordnung 3 gebracht werden kann.

Das Formschlusselement 24 kann alternativ mit dem Dachrahmen 10 oder einem anderen Element des Verdeckgestänges 7 zusammenwirken. An jedem seitlichen Randbereich 18 kann eine Arretiereinrichtung 19 vorgesehen sein. Jedenfalls bewirkt die Arretiereinrichtung 19, dass die in Ablagestellung AS verbrachte Dachanordnung 3 in Richtung der Fahrzeughochachse FH fixiert und zudem übereinander liegende Teile des Verdeckgestänges 5 bzw. einzelne Lenker 11, 12 auf Abstand AB gehalten werden, je nachdem mit welchem Teil das Formschlusselement 24 in Eingriff gebracht wird.

## Patentansprüche

1. Cabriolet mit einer in einem heckseitigen Ablagekasten (14) ablegbaren Dachanordnung (3), mit einem den heckseitigen Ablagekasten (14) zumindest teilweise verschließenden Kastendeckel (15), an dem innenseitig eine Arretiereinrichtung (19) für die in Ablagestellung (AS) im Ablagekasten (14) abgelegte Dachanordnung (3) angebracht ist, wobei die Arretiereinrichtung (19) zumindest ein Formschlussmittel (24) umfasst, das zwischen Dachanordnung (3) und Kastendeckel (15) wirkt und das bewegbar ist, **dadurch gekennzeichnet, dass** das Formschlusselement (24) in einem seitlichen Randbereich (18) an der Innenseite (17) des Kastendeckels (15) angeordnet ist und dass das Formschlusselement (24) als Riegelelement (20) durch eine Schwenkbewegung um eine parallel zu einer Fahrzeughochachse (FH) verlaufende Riegelachse (RA) seitlich mit der abgelegten Dachanordnung (3) in Eingriff bringbar ist.

2. Cabriolet nach Anspruch 1, **dadurch gekennzeichnet, dass** für das Riegelelement (20) ein separater Antrieb (25) vorgesehen ist.

3. Cabriolet nach Anspruch 1 oder 2, **dadurch gekennzeichnet, dass** die Dachanordnung (3) als Verdeck (4) mit einem Verdeckgestänge (5) und einem flexiblen Verdeckbezug (7) ausgeführt ist.

4. Cabriolet nach zumindest einem der vorhergehenden Ansprüche, **dadurch gekennzeichnet, dass** das das Riegelelement (20) mit dem Verdeckgestänge (5) in Eingriff bringbar ist.

5. Cabriolet nach zumindest einem der vorhergehenden Ansprüche, **dadurch gekennzeichnet, dass** das Riegelelement (20) mit einem Lenker (11, 12) des Verdeckgestänges (5) in Eingriff bringbar ist.

## Claims

1. Convertible with a roof arrangement (3) which can be stored in a rear storage box (14), with a box lid (15) which at least partially closes the rear storage box (14) and to the inside of which a locking device (19) for the roof arrangement (3) stored in a storage position (AS) in the storage box (14) is fitted, wherein the locking device (19) comprises at least one interlocking means (24) which acts between the roof arrangement (3) and box lid (15) and which is movable, **characterized in that** the interlocking element (24) is arranged in a lateral edge region (18) on the inside (17) of the box lid (15), and **in that** the interlocking element (24) in the form of a locking element (20) can be brought into engagement laterally with the stored roof arrangement (3) by means of a pivoting movement about a locking axis (RA) running parallel to a vehicle vertical axis (FH).

2. Convertible according to Claim 1, **characterized in that** a separate drive (25) is provided for the locking element (20).

3. Convertible according to Claim 1 or 2, **characterized in that** the roof arrangement (3) is designed as a convertible top (4) with a convertible top linkage (5) and a flexible convertible top cloth (7).

4. Convertible according to at least one of the preceding claims, **characterized in that** the locking element (20) can be brought into engagement with the convertible top linkage (5).

5. Convertible according to at least one of the preceding claims, **characterized in that** the locking element (20) can be brought into engagement with a link (11, 12) of the convertible top linkage (5).

## Revendications

1. Cabriolet comprenant un agencement de toit (3) pouvant être rangé dans un compartiment de rangement (14) du côté arrière, un couvercle de compartiment (15) fermant au moins en partie le compartiment de rangement (14) du côté arrière, sur lequel est monté, du côté intérieur, un dispositif de blocage (19) pour l'agencement de toit (3) rangé dans le compartiment de rangement (14) dans la position de rangement (AS), le dispositif de blocage (19) comprenant au moins un moyen d'engagement positif (24) qui agit entre l'agencement de toit (3) et le couvercle de compartiment (15) et qui est déplaçable, **caractérisé en ce que** l'élément d'engagement positif (24) est disposé dans une région de bord latérale (18) sur le côté intérieur (17) du couvercle de compartiment (15) et **en ce que** l'élément d'engagement positif (24) peut être amené en prise latéralement sous forme d'élément de verrou (20) avec l'agencement de toit rangé (3), par mouvement de pivotement autour d'un axe de verrou (RA) s'étendant parallèlement à un axe vertical du véhicule (FH).

2. Cabriolet selon la revendication 1, **caractérisé en ce que** l'on prévoit un entraînement séparé (25) pour l'élément de verrou (20).

3. Cabriolet selon la revendication 1 ou 2, **caractérisé en ce que** l'agencement de toit (3) est réalisé sous forme de capote (4) avec une tringlerie de capote (5) et un revêtement de capote flexible (7).

4. Cabriolet selon au moins l'une quelconque des revendications précédentes, **caractérisé en ce que** l'élément de verrou (20) peut être amené en prise avec la tringlerie de capote (5).

5. Cabriolet selon au moins l'une quelconque des revendications précédentes, **caractérisé en ce que** l'élément de verrou (20) peut être amené en prise avec un bras oscillant (11, 12) de la tringlerie de capote (5).
